Europäisches Patentamt

(19) European Patent Office

Office européen des brevets

(11) Veröffentlichungsnummer: **0 101 546**
**B1**

(12) **EUROPÄISCHE PATENTSCHRIFT**

(45) Veröffentlichungstag der Patentschrift:
**18.12.85**

(21) Anmeldenummer: **83106475.3**

(22) Anmeldetag: **02.07.83**

(51) Int. Cl.⁴: **H 02 K 5/14**, H 01 R 39/40,
H 02 K 13/00

(54) **Elektromotor, insbesondere zum Antreiben von Hilfsaggregaten in Kraftfahrzeugen.**

(30) Priorität: **21.07.82 DE 3227199**

(43) Veröffentlichungstag der Anmeldung:
**29.02.84 Patentblatt 84/9**

(45) Bekanntmachung des Hinweises auf die Patenterteilung:
**18.12.85 Patentblatt 85/51**

(84) Benannte Vertragsstaaten:
**DE FR GB IT**

(56) Entgegenhaltungen:
**DE - U - 7 715 158**
**US - A - 3 656 018**
**US - A - 3 710 160**
**US - A - 3 784 856**
**US - A - 4 163 167**

**Patent Abstracts of Japan Band 6, Nr. 103, 12. Juni 1982**

(73) Patentinhaber: **ROBERT BOSCH GMBH, Postfach 50,
D-7000 Stuttgart 1 (DE)**

(72) Erfinder: **Schiller, Herbert, Dipl.-Ing.,
Martin-Luther-Strasse 9, D-7580 Bühl (DE)**

ACTORUM AG

## Beschreibung

### Stand der Technik

Die Erfindung geht aus von einem Elektromotor nach der Gattung des Hauptanspruchs. Es ist schon ein Elektromotor bekannt (US-PS Nr. 3710160), bei dem zum Einbringen des Kollektors zwischen die vormontierten Schleifbürsten eine fest mit dem Bauteil des Elektromotors verbundene Schiebeführungseinrichtung nahe dem Trommelkollektor einen quer zur Verschieberichtung liegenden Schlitz aufweist, in welchen ein Schenkel eines Federelements in eine Quernut der Kohlebürste greift und die Kohlebürste ausserhalb eines Bereiches hält, der dem Raum des Trommelkollektors entspricht. Abgesehen von dem zusätzliche Kosten mit sich bringenden Federelement wird auch partiell der Bürstenquerschnitt verringert, was zumindest vorübergehend — nämlich wenn die Schleifbürsten bis in den Bereich der Quernut abgeschliffen sind — den Betrieb des Elektromotors nachteilig beeinflusst. Bei einem anderen bekannten Elektromotor (JP-OS Nr. 57034748) sind die Schiebeführungseinrichtungen einstückig mit dem Bauteil des Elektromotors ausgebildet. Zum Freihalten des Bereichs, der zur Montage des Kollektors erforderlich ist, sind an dem Bürstenhalter biegsame Arme angebracht, welche mit hakenförmigen Ansätzen die Kohlebürsten in den Führungen während der Montagearbeiten zurückhalten.

Demgegenüber soll eine einfache Montage der mit der Schleifbürste und dem Federelement vormontierten Schiebeführungseinrichtung erreicht werden.

### Vorteile der Erfindung

Der erfindungsgemässe Elektromotor mit den kennzeichnenden Merkmalen des Hauptanspruchs hat demgegenüber den Vorteil, dass die komplette Schiebeführungseinrichtung von dem einen Gegenrastmittel in einer Montagestellung gehalten ist, in welcher die Anschlagmittel die Schleifbürsten ausserhalb des für den Trommelkollektor bestimmten Raumes sichern. Nach der Kollektormontage kann die Schiebeführungseinrichtung in ihre Betriebsstellung gebracht werden, wo sie durch das andere Gegenrastmittel gehalten ist. Dabei werden gleichzeitig die Anschlagmittel entfernt, so dass die Schleifbürsten am Kollektor zur Anlage kommen.

Durch die in den Unteransprüchen aufgeführten Massnahmen sind vorteilhafte Weiterbildungen und Verbesserungen des im Hauptanspruch angegebenen Elektromotors möglich.

### Zeichnung

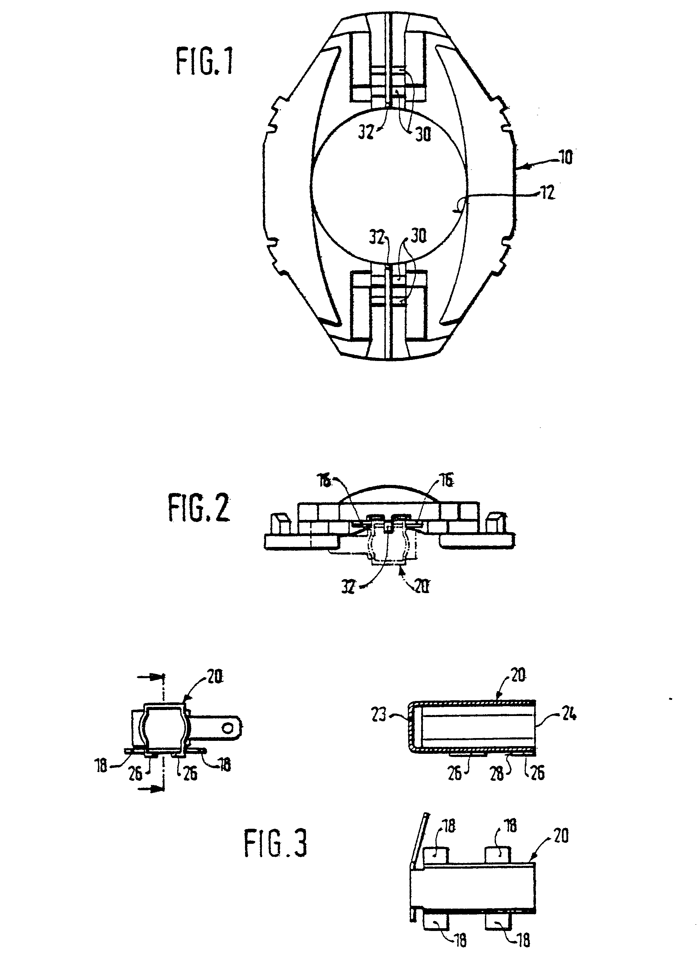

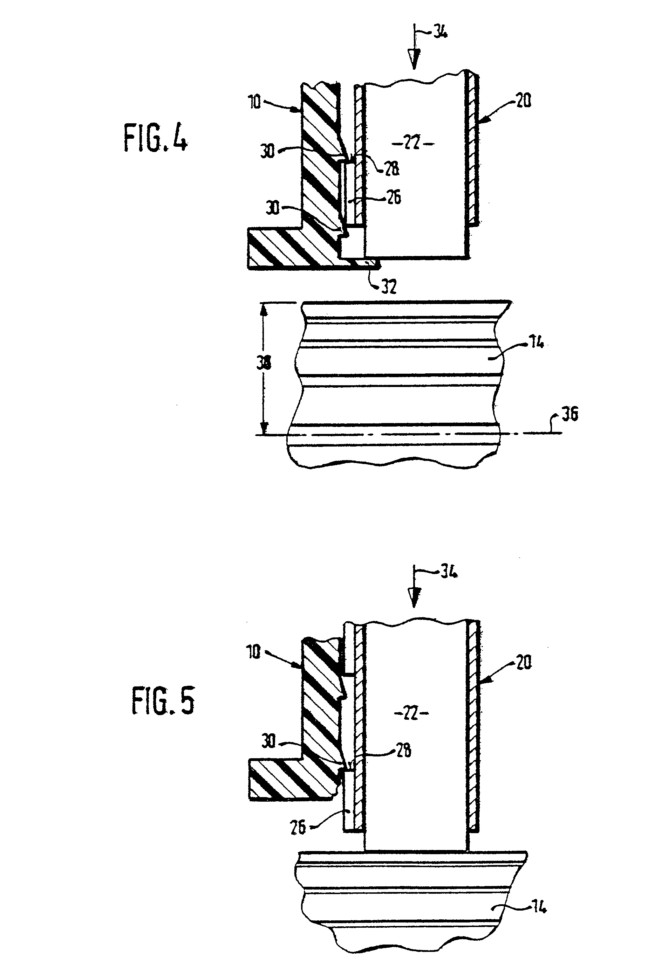

Ein Ausführungsbeispiel der Erfindung ist in der Zeichnung dargestellt und in der nachfolgenden Beschreibung näher erläutert. Es zeigen Fig. 1 eine Draufsicht auf ein als Bürstentragplatte ausgebildetes Bauteil, das im Motorgehäuse befestigt wird, Fig. 2 eine Ansicht von oben auf das Bauteil gemäss Fig. 1, Fig. 3 verschiedene Ansichten einer Schiebeführungseinrichtung für die Schleifbürsten, Fig. 4 einen Schnitt durch die Anordnung in einer Montagestellung und Fig. 5 einen Schnitt durch die Anordnung gemäss Fig. 4, bei der sich die Schiebeführungseinrichtung und die Schleifbürste in Betriebsstellung befinden.

### Beschreibung des Ausführungsbeispiels

In Fig. 1 ist ein zu einem Elektromotor gehörendes Bauteil 10 dargestellt, das eine sogenannte Bürstentragplatte bildet. Die Bürstentragplatte 10 ist fest mit einem nicht dargestellten Motorgehäuse verbunden. Das aus Kunststoff gefertigte Bauteil 10 hat eine zentrale Ausnehmung 12, in der bei montiertem Motor ein zu diesem gehörender Trommelkollektor 14 (Fig. 4 und 5) liegt. Das Bauteil 10 weist zwei einander gegenüberliegende, zum Zentrum der Ausnehmung 12 gerichtete und paarweise angeordnete Führungsschlitze 16 auf (Fig. 2), in welchen im zusammengebauten Zustand Führungslappen 18 gleiten, die zu einer Schiebeführung 20 einer Schleifbürste 22 gehören (Fig. 3, 4 und 5). Wie insbesondere aus Fig. 3 ersichtlich ist, ist die Schiebeführungseinrichtung 20 ein aus Blech gebogenes rohrförmiges Teil, dessen eine Rohrmündung durch eine Wand 23 verschlossen ist. Der Wand 23 liegt eine Mündung 24 gegenüber. Biegelappen 26 der Schiebeführungseinrichtung 20 bilden eine Schulter 28, die als Rastmittel dient. Am Bauteil 10 sind sägezahnförmige Vorsprünge 30 als Gegenrastmittel angeordnet, die in bestimmter Weise mit den Rastmitteln 28 der Schiebeführungseinrichtung 20 zusammenwirken. Aus den Fig. 1, 2 und 4 ist weiter ersichtlich, dass das Bauteil 10 im Bereich der Führungsschlitze 16 je einen Anschlaglappen 32 aufweist, der in den Verschiebeweg der Schleifbürste 22 ragt. Der Anschlaglappen 32 ist einstückig mit dem Bauteil 10 verbunden.

Zur Montage der Bürstentragplatte 10 im Motor werden zunächst zwei Schiebeführungseinrichtungen 20 mit ihren Führungslappen 18 so in die Führungsschlitze 16 eingebracht (Fig. 2), dass die Wand 23 der Schiebeführungseinrichtung 20 auf der von der Ausnehmung 12 abgewandten Seite der Bürstentragplatte 10 liegt. Die Schiebeführungseinrichtung 20 wird zunächst mit einer nicht dargestellten Druckfeder versehen, welche sich einerseits an der Wand 23 und andererseits an dem vom Kollektor 14 abgewandten Ende der Schleifbürste 22 abstützt. Danach wird die mit der Schleifbürste 22 versehene Schiebeführungseinrichtung 20 in der oben beschriebenen Weise in die Führungsschlitze 16 eingebracht, bis sich die in Fig. 4 dargestellte Vormontage-Stellung ergibt. Dabei liegt die dem Kollektor 14 zugewandte Stirnfläche der Schleifbürste 22 am Anschlaglappen 32 an, wobei sich eine gewisse Spannung der zusammengedrückten Feder in Richtung des Pfeils 34 ergibt (Fig. 4). Die Schiebeführungseinrichtung 20 ist so weit in die Führungsschlitze 16 hineingeschoben worden, dass sich die Rastschulter 28 an dem ersten der beiden Vorsprünge 30 abstützt. In dieser Stellung lässt sich nun die Bürstentragplatte 10 im Motor montieren, wobei die Ausnehmung 12 zur späteren Aufnahme des als Trommelkollektor ausgebildeten Kollektors 14 des Elektromotors freigehalten wird. Die Anschlaglappen 32 ragen in den Verschiebebereich der Schleifbürsten 22 und halten diese in einem Abstand von der Kollektordrehachse 36, der grösser ist als das Mass 38, das dem Radius des Kollektors 14 entspricht. Nach dem Einbringen des Trommelkollektors 14 in die Ausnehmung 12 — diese Stellung ergibt sich in der Betriebsstellung des Motorankers — wird die Schiebeführung 20 in Richtung des Pfeiles 34 gegen den Anschlaglappen 32 gedrückt, so dass der Anschlaglappen 32 abbricht. Dabei gelangt die Rastschulter 28 der Biegelappen 26 mit dem zweiten sägezahnförmigen Vorsprung 30 in Wirkeingriff. Weiter drückt die vorgespannte Andrückfeder die Schleifbürste 22 in Richtung des Pfeiles 34 nach unten, bis dieser an der Mantelfläche des Trommelkollektors 14 zur Anlage kommt (Fig. 5). Nun hat die Schiebeführungseinrichtung 20 zusammen mit der Schleifbürste 22 die normale Betriebsstellung erreicht, in welcher die Schiebeführungseinrichtung 20 durch die Rastmittel 28 und Gegenrastmittel 30 sicher gehalten wird.

Die Anschlaglappen 32 bilden also entfernbare Mittel, welche vor dem Einsetzen des Kollektors 14 in seine in Fig. 5 dargestellte Betriebsstellung die Schleifbürsten ausserhalb eines Bereiches halten, der dem Raum des Trommelkollektors 14 entspricht. Nach dem Abbrechen der Anschlaglappen 32 gelangen sowohl die Schleifbürste 22 als auch deren Schiebeführung 20 in die in Fig. 5 gezeigte Betriebsstellung.

Abweichend von der beschriebenen Ausführung ist es auch denkbar, dass die Anschlaglappen 32 aus dem Verschiebebereich der Schleifbürsten 22 herausgebogen werden, wenn diese aus einem biegbaren Material gefertigt sind.

## Patentansprüche

1. Elektromotor, insbesondere zum Antreiben von Hilfsaggregaten in Kraftfahrzeugen, mit einem Trommelkollektor (14), wenigstens zwei mit diesem zusammenarbeitenden, in Schiebeführungseinrichtungen (20) von Federelementen quer zur Kollektordrehachse (36) belasteten Schleifbürsten (22), wobei jedes Federelement zwischen dem von dem Kollektor (14) abgewandten Ende der Schleifbürste (22) und einer dieser gegenüberliegenden Wand (23) der Schiebeführungseinrichtung (20) vorgespannt gekapselt ist, und mit in den Verschiebeweg der Schleifbürsten (22) hineinragenden und aus diesem entfernbaren Anschlagmitteln (32), welche vor dem Einsetzen des Kollektors (14) die Schleifbürsten (22) ausserhalb des Raumes des Trommelkollektors (14) halten, dadurch gekennzeichnet, dass die Anschlagmittel (32) an einem die Schiebeführungseinrichtungen (20) haltenden Bauteil (10) des Elektromotors angeordnet sind und vor dem Einsetzen des Kollektors (14) zwischen den Schleifbürsten und dem Kollektorraum liegen, dass jede Schiebeführungseinrichtung (20) Rastmittel (28) hat, denen zwei Gegenrastmittel (30) an dem Bauteil (10) des Elektromotors zugeordnet sind, und wobei die Rast- und Gegenrastmittel eine radial nach aussen gerichtete Bewegung der Schiebeführungseinrichtung verhindern, und wobei das erste Gegenrastmittel in einer Montagestellung und das zweite Gegenrastmittel in einer Betriebsstellung der Schiebeführungseinrichtung (20) mit deren Rastmittel (28) in Eingriff gelangen.

2. Elektromotor nach Anspruch 1, dadurch gekennzeichnet, dass das Bauteil (10) zwei mit Abstand voneinander angeordnete, sägezahnförmige Vorsprünge (30) hat, welche die Gegenrastmittel für eine die Rastmittel der Schiebeführung (20) bildende Rastschulter (28) bilden.

3. Elektromotor nach Anspruch 2, dadurch gekennzeichnet, dass das Bauteil (10) mit zum Kollektor (14) gerichteten Führungsschlitzen (16) versehen ist, denen Führungslappen (18) der Schiebeführungseinrichtung (20) zugeordnet sind.

4. Elektromotor nach einem der Ansprüche 1 bis 3, dadurch gekennzeichnet, dass der Anschlag (32) für die Schleifbürste (22) durch einen an das Bauteil (10) angeformten, abbrechbar ausgebildeten Lappen (32) gebildet ist, der bezogen auf die Kollektordrehachse (36) um mehr als den Kollektorradius (38) von der Achse entfernt ist.

5. Elektromotor nach einem der Ansprüche 1 bis 4, dadurch gekennzeichnet, dass das Bauteil (10) aus Kunststoff gefertigt ist.

## Claims

1. Electric motor, in particular for driving auxiliary units in motor vehicles, having a drum collector (14) and at least two brushes (22) interacting with the drum collector (14) and loaded in sliding guide devices (20) by spring elements transversely to the collector rotary axis (36), with each spring element being encased in a pretensioned manner between the end of the brush (22) facing away from the collector (14) and a wall (23) of the sliding guide device (20) opposite the brush (22), and having stop means (32) which project into the displacement path of the brushes (22) and can be removed out of this displacement path, and which, before the collector (14) is inserted, retain the brushes (22) outside the space of the drum collector (14), characterized in that the stop means (32) are arranged on a component (10) of the electric motor which retains the sliding guide devices (20) and are located between the brushes and the collector space before the collector (14) is inserted, that each sliding guide device (20) has latching means (28) to which are allocated two counter latching means (30) on the component (10) of the electric motor, with the latching and counter latching means preventing radially outward directed movement of the sliding guide device, and with the first counter latching means coming into engagement with the latching means (28) of the sliding guide device (20) in an assembly position of the latter and the second counter latching means coming into engagement with the latching means (28) of the sliding guide device (20) in an operating position of the latter.

2. Electric motor according to Claim 1, characterized in that the component (10) has two sawtooth shaped projections (30) which are arranged at a distance from one another and which form the counter latching means for a latching shoulder (28) forming the latching means of the sliding guide (20).

3. Electric motor according to Claim 2, characterized in that the component (10) is provided with guide slots (16) directed towards the collector (14), to which guide slots (16) are allocated guide tangs (18) of the sliding guide device (20).

4. Electric motor according to one of Claims 1 to 3, characterized in that the stop (32) for the brush (22) is formed by a tang (32) which is integrally formed on the component (10), is designed in such a way that it can be broken off and, with respect to the collector rotary axis (36), is removed from the axis by a greater distance than the collector radius (38).

5. Electric motor according to one of Claims 1 to 4, characterized in that the component (10) is made of plastic.

## Revendications

1. Moteur électrique, en particulier pour l'entraînement des groupes auxiliaires des véhicules automobiles, comportant un collecteur du type tambour (14), au moins deux balais (22) collaborant avec le collecteur, contraints par des ressorts, transversalement à l'axe de rotation du collecteur (36), dans des dispositifs de guidage en coulissement (20), étant précisé que chaque ressort est enfermé, avec précontrainte, entre l'extrémité du balai (22) opposée au collecteur (14) et une paroi (23) du dispositif de guidage en coulissement située en face de ce balai, et comportant aussi des moyens formant butée (32) qui pénètrent sur le trajet de coulissement des balais (22), que l'on peut éloigner de ce trajet et qui, avant introduction du collecteur (14), maintiennent les balais (22) en dehors de la place occupée par le collecteur de tube tambour (14), caractérisé en ce que les moyens formant butée (32) sont disposés sur un composant (10) du moteur électrique qui maintient les dispositifs de guidage en coulissement (20) et, avant introduction du collecteur (14), se trouvent entre les balais et la place du collecteur; en ce que chaque dispositif de guidage en coulissement (20) présente des moyens de crantage (28) auxquels correspondent deux moyens de contre-crantage (30) sur le composant (10) du moteur électrique; étant précisé que les moyens de crantage et de contre-crantage interdisent un déplacement, dirigé radialement vers l'extérieur, du dispositif de guidage en coulissement et étant précisé que le premier moyen de contre-crantage vient en prise avec son moyen de crantage (28) en position de montage du dispositif de guidage en coulissement (20) et que le deuxième moyen de contre-crantage vient en prise avec son moyen de crantage (28) en position de service de ce dispositif (20).

2. Moteur électrique selon la revendication 1, caractérisé en ce que le composant (10) présente deux saillies (30) en dents de scie, disposées à une certaine distance l'une de l'autre et formant les moyens de contre-crantage pour un épaulement de crantage (28) qui forme le moyen de crantage du guidage en coulissement (20).

3. Moteur électrique selon la revendication 2, caractérisé en ce que le composant (10) est muni de rainures de guidage (16) dirigées ver le collecteur (14) auxquelles correspondent des languettes de guidage (18) du dispositif de guidage en coulissement (20).

4. Moteur électrique selon l'une des revendications 1 à 3, caractérisé en ce que la butée (32) pour le balai (22) est formée par une languette (32) venue de forme sur le composant (10), conçue cassable et éloignée de l'axe de rotation du collecteur (36) d'une valeur supérieure au rayon de ce collecteur (38).

5. Moteur électrique selon l'une des revendications 1 à 4, caractérisé en ce que le composant (10) est fabriqué en plastique.

FIG.1

FIG.2

FIG.3

FIG.4

FIG.5